# EUROPEAN PATENT SPECIFICATION

(11) **EP 2 442 060 B1**
(45) Date of publication and mention of the grant of the patent: **04.12.2013**
(21) Application number: 10187373.5
(22) Date of filing: 13.10.2010
(51) Int. Cl.: F28F 13/08, H02K 1/20, H02K 9/19

(54) **A generator, in particular for a wind turbine**
Generator, insbesondere für eine Windturbine
Générateur, en particulier pour éolienne

(43) Date of publication of application: 18.04.2012
(73) Proprietor: Siemens Aktiengesellschaft, 80333 München (DE)
(72) Inventor: Besnerais, Jean Le, 7330, Brande (DK)

(56) References cited:
- EP-A1- 1 841 043
- EP-A1- 2 109 206
- EP-A1- 2 182 619
- WO-A1-01/21956
- DE-A1-102008 002 096
- DE-C1- 3 635 297
- DE-C1- 19 749 108
- US-A- 5 568 781
- US-A1- 2007 289 718

## Description

The present invention relates to a wind turbine with a generator according to the preamble of claim 1.

A wind turbine of this type has been disclosed in EP-A-2 182 619.

Such generators are components of wind turbines, which are provided with a rotor shaft which is part of the electrical generator producing electricity during movement of the rotor relative to the stator. The stator comprises a lamination and conductors, the rotor comprises a number of permanent magnets or electrically charged magnets so that an electric voltage is generated when the rotor is turned.

In generators heat losses occur, mainly from electromagnetic losses (Joule losses, iron losses, copper losses, ...). A substantial amount of heat is released, which has to be removed in order to avoid hot spots. In permanent magnet generators these losses mainly come from copper losses in stator conductors, resulting in a high temperature in coils an especially in end windings that are surrounded by air. The temperature of the stator windings must be kept low enough to avoid a decrease of the insulation lifetime, therefore an efficient cooling system is of prime importance. The efficiency of a cooling system can be evaluated by the thermal resistance form the heat source to the coolant, as an alternative the power which is required by a pump or a fan can be evaluated.

In conventional generators for wind turbines the stack is cooled by circulating air through the end windings, the air gap between stator and rotor and radial ducts in stator and/or rotor. It is also possible to use liquid-cooled pipes inserted in slots or hollow copper strands. Further it has been proposed to use high power transformers which are directly emerged in oil and cooled by natural convection.

It is therefore an object of the present invention to provide a wind turbinewith a generator with an efficient cooling in order to gain a uniform temperature distribution.

According to the present invention this object is achieved in the above defined wind turbine in that the inner cross-section of a cooling pipe decreases from inlet to outlet, whereby the outer diameter of the cooling pipes is constant.

The invention is based on the idea that a very efficient cooling can be achieved by using cooling pipes which are able to keep the stator windings at a temperature which is low enough so that a decrease of the insulation lifetime is avoided.

Preferably the cooling pipes run parallel to a generator shaft. Accordingly a large number of cooling pipes can be used, whereby the cooling pipes are arranged in the stator lamination, in circumferential direction of the stator.

An even better cooling effect can be achieved when a cooling pipe goes through end windings on both sides of the stator lamination. Consequently a cooling pipe can pass the end windings on one side, the stator lamination and the end windings on the other side of the stator lamination.

According to further development of the inventive wind turbine the end windings may be embedded in a potting material. The end windings gaps are filled with the potting material and the cooling pipe goes through the end windings so that heat released by the end windings can be removed by the coolant.

In the inventive wind turbine it is preferred that a cooling pipe comprises a manifold in the area of the end windings. Most part of the cooling pipe is arranged inside the stator lamination, in the area of the end windings "extensions" are provided comprising a manifold.

According to the inventive wind turbine multiple cooling pipes may be connected in series or parallel. It is possible to connect all cooling pipes, which are arranged circumferentially along the stator, in parallel, this embodiment requires only a low number of connectors. However, other embodiments are possible, where several cooling pipes are connected in series, further a combination of a series connection and a parallel connection can be envisaged.

A cooling pipe of the inventive wind turbine comprises an inlet and an outlet. A pump or a fan may be connected to the inlet and the outlet so that a coolant can be pumped through the cooling pipes. Normally the cooling pipes are straight parallel pipes which are easy to manufacture, which are inserted all through the stator lamination, pressure plates and end windings. Consequently the inventive generator can be manufactured at relatively low costs.

An even better cooling efficiency can be achieved because the inner cross-section of a cooling pipe decreases from inlet to outlet. When a cooling pipe with a changing diameter is used the cooling system can be operated at a low flow rate without the drawback that an uneven distribution of temperature occurs. As the inner cross-section of a cooling pipe decreases the heat transfer coefficient increases, thereby keeping a winding temperature constant all along the cooling pipe.

According to a further development of the generator of the inventive wind turbine the inner cross-section of a cooling pipe may comprise a non wetted surface, which increases from inlet to outlet. The use of a non wetted surface makes it possible to use cooling pipes with a constant outer diameter and different inner diameter. It is advantageous that only one punching tool for creating the holes in the stator lamination is needed, further the amount of heat transfer can be controlled by the use of cooling pipes with a different non wetted surface inside.

The invention and its underlying principle will be better understood when consideration is given to the following description of a preferred embodiment.

In the accompanying drawings:
- Fig. 1: is a detail of a generator of an inventive wind turbine in a schematic sectional view;
- Fig. 2: is a schematic drawing of several parallel cooling pipes of a generator; and
- Fig. 3: is a sectional view of an inlet and an outlet of a cooling pipe of the generator.

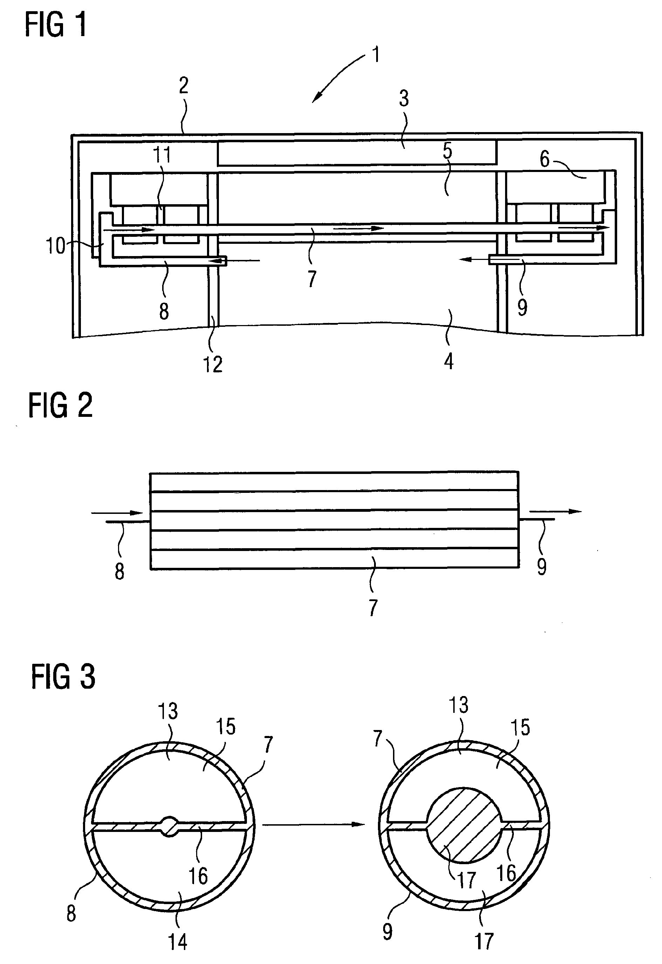

Fig. 1 shows a detail of a generator 1 in a cross-sectional view. The generator 1 comprises a rotor 2, comprising a number of magnets 3, arranged in circumferential direction.

A stator 4 comprises a stator lamination 5 with end windings 6 on both sides of the stator lamination 5.

When rotor 2, which has a circular shape, is rotated around the stator 4, an electric current is generated in the windings of the stator lamination 5. During movement of the rotor 2 heat losses occur so that the stator lamination 5 is heated up. In order to dissipate the heat a number of cooling pipes 7 are provided within the stator lamination 5. A large number of cooling pipes 7 is arranged in parallel along the circumferential direction of stator 4. In the embodiment of fig. 1 all cooling pipes 7 are connected parallel, a pump (not shown) is used for conveying a coolant through the cooling pipes 7.

Each cooling pipe 7 comprises an inlet 8 and an outlet 9 the arrows indicate the flow direction. In the area of the inlet 8 and the outlet 9 a manifold 10 is provided on each side, so that the coolant flows from the inlet through manifold, the straight part of the cooling pipe 7 within the stator lamination 5 and the manifold on the opposite side to outlet 9. The end windings 6 are embedded in a potting material 11.

Heat losses in stator lamination 5 and end windings 6 are removed by the coolant, which is pumped through cooling pipe 7.

All cooling pipes 7 are simple straight parallel pipes which are easy to manufacture. Only one punching tool is needed in order to create holes in the stator lamination. The cooling pipes 7 are inserted all through stator lamination 5, pressure plates 12 and end windings 6.

Fig. 2 is a schematic drawing and shows several parallel cooling pipes 7 which are connected to an inlet 8 and an outlet 9. In order to remove a certain amount of heat through a parallel circuit of cooling pipes 7, as shown in fig. 2, one has the choice between a high flow rate and low temperature increase of the coolant, or a low flow rate and a high temperature increase of the coolant. The second solution will require a lower pump power, as it is proportional to the pressure drop, which is proportional to the squared fluid velocity, and the flow rate, but it will end up with a highly uneven temperature of the generator. As an example the end windings at the outlet 9 of the cooling pipes 7 could be 15 °C warmer that the end windings on the inlet 8. This uneven distribution of temperature is further increased by the fact that copper losses increase with temperature as the electrical resistance increases with temperature. To operate this cooling system at low flow rate without this drawback, the internal surface of the cooling pipes 7 is shaped so that it decreases from inlet 8 to outlet 9. This way the local speed of the coolant increases when getting from the cool side at the inlet 8 closer to the warm side at outlet 9. The heat transfer coefficient is increased, whereby the temperature of the windings of the stator lamination is kept constant all along the system of cooling pipes or at least within a predetermined range.

In general the thermal resistance from coolant (cooling medium) to heat source can be progressively reduced from inlet to outlet by the following technical features: reduction of the distance between cooling pipe and windings, reduction of the cooling pipe internal surface, decreasing the external diameter, reduction of the cooling pipe internal surface, increasing a non wetted surface inside the cooling pipe.

The last proposition is the most practical as is prevents from using a different punching tool for every lamination sheet according to its position in axial direction. Therefore it is preferred that all the lamination are punched with the same external diameter, only the internal diameter changes.

Fig. 3 shows an example of a cooling pipe with changing diameter. On the left hand side of fig. 3 a cross section of cooling pipe 7 at inlet 8 is shown, on the right hand side of fig. 3 a cross section of cooling pipe 7 at outlet 9 is shown.

Cooling pipe 7 is divided into two compartments 14, 15, which are filled with coolant 13. An inner wall 16 separates compartment 14 from compartment 15. In the embodiment near inlet 8 the inner cross-section is hardly reduced by the inner wall 16, whereas the inner cross-section near outlet 9 comprises a larger non wetted surface due to a circular section 17 in the centre of the inner wall 16, which significantly decreases the cross-section of the compartments 14, 15. Consequently the fluid velocity near the outlet 9 is increased compared to the fluid velocity at inlet 8. The higher velocity of coolant 13 leads to a higher thermal conductivity so that an even temperature is achieved along cooling pipe 7.

## Claims

1. A wind turbine, with a generator (1), comprising a rotor (2) with a number of circumferentially arranged magnets (3), a stator (4) with a lamination (5) and conductors and a means for cooling the stator (4), whereby the cooling means comprises cooling pipes (7) with an inlet (8) and an outlet (9), arranged along the stator lamination (5) and filled with a coolant, **characterised in that** the inner cross-section of a cooling pipe (7) decreases from inlet (8) to outlet (9), whereby the outer diameter of the cooling pipes (7) is constant.

2. A wind turbine according to claim 1, **characterised in that** the cooling pipes (7) run parallel to a generator shaft.

3. A wind turbine according to claim 1 or 2, **characterised in that** a cooling pipe (7) goes through end windings (6) on both sides of the stator lamination (5).

4. A wind turbine according to claim 3, **characterised in that** the end windings (6) are embedded in a potting material (11).

5. A wind turbine according to claim 3 or 4, **characterised in that** a cooling pipe (7) comprises a manifold (10) in the area of the end windings (6).

6. A wind turbine according to any of the preceding claims, **characterised in that** multiple cooling pipes (7) are connected in series or parallel.

7. A wind turbine according to any of the preceding claims, **characterised in that** the inner cross-section of a cooling pipe (7) comprises a non wetted surface, which increases from inlet (8) to outlet (9).

## Patentansprüche

1. Windenergieanlage mit einem Generator (1), der einen Rotor (2) mit einer Anzahl von in Umfangrichtung angeordneten Magneten (3), einen Stator (4) mit einem Blechpaket (5) und Leitern und ein Mittel zum Kühlen des Stators (4) umfasst, wobei das Kühlungsmittel Kühlrohre (7) mit einem Einlass (8) und einem Auslass (9) umfasst, die entlang des Statorblechpakets (5) angeordnet und mit einem Kühlmittel gefüllt sind, **dadurch gekennzeichnet, dass** sich der Innenquerschnitt eines Kühlrohres (7) vom Einlass (8) zum Auslass (9) verkleinert, wobei der Außendurchmesser der Kühlrohre (7) konstant ist.

2. Windenergieanlage nach Anspruch 1, **dadurch gekennzeichnet, dass** die Kühlrohre (7) parallel zu einer Generatorwelle verlaufen.

3. Windenergieanlage nach Anspruch 1 oder 2, **dadurch gekennzeichnet, dass** ein Kühlrohr (7) durch Wickelköpfe (6) auf beiden Seiten des Statorblechpakets (5) verläuft.

4. Windenergieanlage nach Anspruch 3, **dadurch gekennzeichnet, dass** die Wickelköpfe (6) in eine Vergussmasse (11) eingebettet sind.

5. Windenergieanlage nach Anspruch 3 oder 4, **dadurch gekennzeichnet, dass** ein Kühlrohr (7) ein Sammelrohr (10) im Bereich der Wickelköpfe (6) umfasst.

6. Windenergieanlage nach einem der vorhergehenden Ansprüche, **dadurch gekennzeichnet, dass** mehrere Kühlrohre (7) in Reihe oder parallel geschaltet sind.

7. Windenergieanlage nach einem der vorhergehenden Ansprüche, **dadurch gekennzeichnet, dass** der Innenquerschnitt eines Kühlrohres (7) eine nicht benetzte Fläche umfasst, welche sich vom Einlass (8) zum Auslass (9) vergrößert.

## Revendications

1. Éolienne, avec un générateur (1), comprenant un rotor (2) avec un certain nombre d'aimants (3) agencés circonférentiellement, un stator (4) avec une stratification (5) et des conducteurs et un moyen pour refroidir le stator (4), dans laquelle le moyen de refroidissement comprend des tuyaux de refroidissement (7) avec une entrée (8) et une sortie (9), agencés le long de la stratification (5) de stator et remplis d'un réfrigérant, **caractérisée en ce que** la section transversale intérieure d'un tuyau de refroidissement (7) diminue de l'entrée (8) jusqu'à la sortie (9), dans laquelle le diamètre extérieur des tuyaux de refroidissement (7) est constant.

2. Éolienne selon la revendication 1, **caractérisée en ce que** les tuyaux de refroidissement (7) courent parallèlement à un arbre de générateur.

3. Éolienne selon la revendication 1 ou 2, **caractérisée en ce qu'**un tuyau de refroidissement (7) traverse des enroulements d'extrémité (6) sur les deux côtés de la stratification (5) de stator.

4. Éolienne selon la revendication 3, **caractérisée en ce que** les enroulements d'extrémité (6) sont intégrés dans un matériau d'enrobage (11).

5. Éolienne selon la revendication 3 ou 4, **caractérisée en ce qu'**un tuyau de refroidissement (7) comprend un collecteur (10) dans la zone des enroulements d'extrémité (6).

6. Éolienne selon l'une quelconque des revendications précédentes, **caractérisée en ce que** des tuyaux de refroidissement (7) multiples sont connectés en série ou en parallèle.

7. Éolienne selon l'une quelconque des revendications précédentes, **caractérisée en ce que** la section transversale intérieure d'un tuyau de refroidissement (7) comprend une surface non mouillée, qui augmente de l'entrée (8) jusqu'à la sortie (9).
